Europäisches Patentamt

European Patent Office

Office européen des brevets

(11) Publication number: **0 114 794**
**B1**

# (12) EUROPEAN PATENT SPECIFICATION

(45) Date of publication of patent specification: **23.09.87**

(21) Application number: **84850002.1**

(22) Date of filing: **03.01.84**

(51) Int. Cl.⁴: **B 60 B 33/02**, B 60 B 33/00

(54) **Support wheel for a domestic appliance, particularly for a washing machine.**

(30) Priority: **18.01.83 FR 8300700**

(43) Date of publication of application:
**01.08.84 Bulletin 84/31**

(45) Publication of the grant of the patent:
**23.09.87 Bulletin 87/39**

(84) Designated Contracting States:
**AT CH DE GB IT LI NL SE**

(56) References cited:
**CH-A- 205 388
DE-A-2 232 019
FR-A- 773 603
FR-A-1 128 111
FR-A-1 461 474
GB-A- 734 807
US-A- 134 727
US-A-2 227 832
US-A-2 866 222
US-A-3 651 911
US-A-4 336 630**

(73) Proprietor: **USINES & FONDERIES ARTHUR MARTIN, S.A.**
**43, Avenue Félix Louat B.P. 131
F-60307 Senlis Cedex (FR)**

(72) Inventor: **Snelders, Georges Victor
26, rue Madame de Cormont
F-08170 Haybes (FR)**

(74) Representative: **Hagelbäck, Evert Isidor et al
c/o AB Electrolux Patentavdelningen
S-105 45 Stockholm (SE)**

Courier Press, Leamington Spa, England.

## Description

The present invention relates to a support wheel unit for a domestic appliance of the kind indicated in the preamble of the appending Claim 1, which is known from FR—A—1,128,111.

It has been proposed to provide cookers, washing and dish-washing machines, for example, with support wheels in order to make easier the movement of such appliance on a supporting surface, e.g. the floor of a kitchen. As far as washing machines are concerned support wheels may involve problems as to stability. These problems are caused by the unbalance forces which very often occur during spin-drying and which cause displacement of the machine over the floor.

US—2,866,222 discloses a castor for a washing machine which has a castor wheel in the shape of a polygon. With such a shape of the wheel displacement caused by unbalance forces is greatly reduced.

FR—A—1,128,111 shows a support wheel unit for a domestic appliance comprising a wheel rotatably supported on a shaft which is secured to two arms of a support member, said wheel comprising two rollers which engage which the sides of the tyre forming the supporting surface of the wheel. In this reference, however, no braking force is applied to the wheel.

FR—A—773,603 discloses a support wheel unit wherein braking means are provided to engage with the wheel to cause a braking effect on it. A lever is provided to operate the braking means to and from the position of engagement with the wheel.

With reference to the prior art indicated above, the object of the invention is to provide a support wheel unit for a domestic appliance, e.g. a washing machine, wherein the support wheel is effectively prevented from being easily rotated by a braking force continuously applied to the wheel, eliminating the need for any separate operating means (lever) to switch-in and out the braking force.

This object is achieved by a support wheel unit with the features of independent Claim 1. Particular embodiments of the invention are achieved with the features of the dependent Claims.

Preferably but not necessarily, the support wheel has the shape of a polygon and by applying a braking force to the wheel the rotation preventing effect caused by this specific shape of the wheel will be increased.

An embodiment of the invention will now be described with reference to the accompanying drawings, in which

Fig. 1 is a section through a support wheel unit according to the invention,

Fig. 2 is a side-view of the unit of Fig. 1,

Fig. 3 is a schematic view of a washing machine provided with support wheel units according to Figs. 1 and 2, and

Fig. 4 is a detail view showing the securing of a support wheel unit to the base plate of the washing machine of Fig. 3.

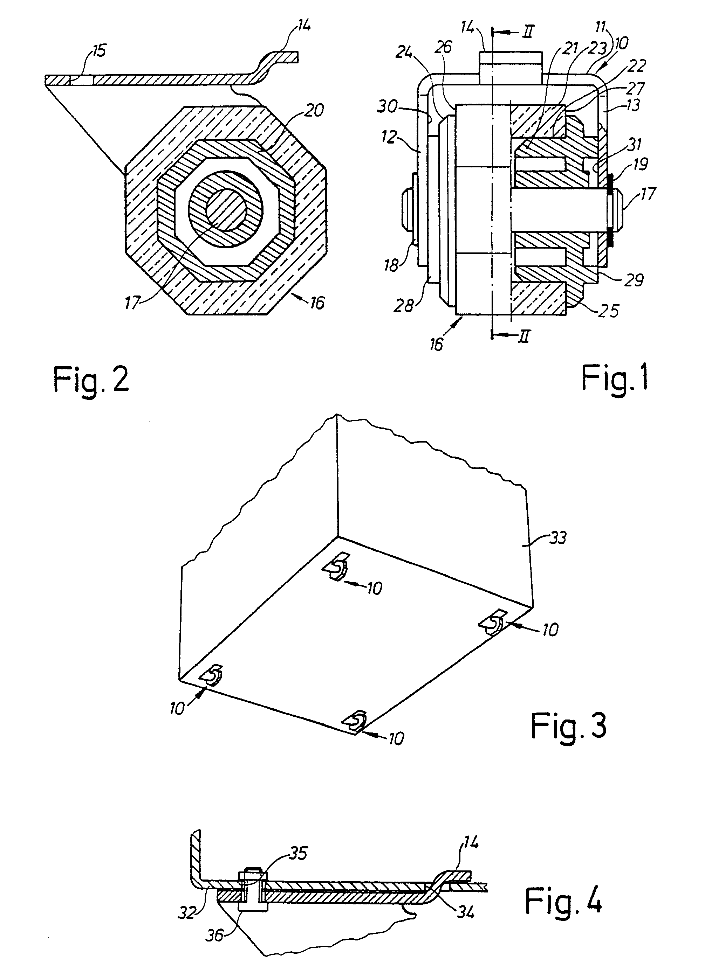

In Fig. 1 a support wheel unit is generally referred to by numeral 10. The unit comprises a frame or support member 11 which has a pair of support arms 12, 13. Means are provided for securing the unit 10 to the base plate 32 of a washing machine 33, and, as shown in Fig. 3, preferably four wheel units are connected, one at each corner of the base plate. The said means comprises a lug 14 inserted in a hole 34 in the base plate and a hole 15 which cooperates with a hole 35 in the base plate. The support wheel unit is secured to the base plate by a screw joint 36 extending through the holes 15 and 35. A wheel generally denoted by 16 is rotatably supported on a shaft 17 mounted in the support arms 12, 13 and secured in place by lock washers 18, 19. The wheel consists of two rollers 20, 21 which together form a support surface 22 for a tyre 23, made of a compressible material, preferably rubber. The rollers have annular flanges 24, 25 which extend radially and engage with side portions 26, 27 of the tyre 23. Axially extending annular flanges 28, 29 on the rollers 20, 21 engage with surfaces 30, 31 on the support arms 12, 13. By the engagement between the flanges 28, 29 and the surfaces 30, 31, respectively, the tyre is compressed causing a biassing force which presses the respective roller against the corresponding surface. The tyre has octagonal shape providing eight flattened surfaces around its periphery.

When a washing machine provided with support wheels of the kind described above is in its permanent position the engagement between the flanges 28, 29 and the surfaces 30, 31 will effectively restrict rotation of the wheels due to unbalance forces during spin-drying operation of the machine. This frictional braking effect will add to the rotation restricting effect caused by the octagonal form of the tyre 23. In case the machine is to be moved on the floor to another position, e.g. for service, only a slightly increased force is needed to cause such movement of the machine and no operating levers or the like need to be operated to release the support wheels for rotation.

## Claims

1. Support wheel unit (10) for a domestic appliance, preferably a washing machine, comprising a wheel (16) rotatably supported on a shaft (17) which is secured between two arms (12, 13) of a support member (11) connected to the base (32) of the machine, said wheel (16) comprising two rollers (20, 21) engaging with the sides of a tyre (23) arranged between the rollers (20, 21) and forming the supporting surface of the wheel, characterized in that the rollers (20, 21) are rotatably arranged on the shaft (17) and in frictional engagement with the inner surfaces (30, 31) of the arms (12, 13), and the tyre (23) is compressed between the rollers (20, 21) causing a biasing force which presses the rollers against the inner surfaces of the arms.

2. Unit according to Claim 1, characterized in that the rollers (20, 21) form a peripheral support surface (22) for the tyre (23), each roller being provided with an annular flange (24, 25) which extends radially and engages with the respective side of the tyre (23), the roller having an additional annular flange (28, 29) which extends axially and along at least part of its annular surface engages with the adjacent arm (12, 13) of the support member (11).

3. Unit according to Claim 2, characterized in that the supporting surface of the tyre (23) has the shape of a polygon, the support surface (22) of the rollers (20, 21) being correspondingly shaped.

4. Unit according to Claim 3, characterized in that the supporting surface of the tyre (23) has the shape of an octagon.

5. Unit according to any of the preceding claims, characterized in that the tyre (23) is made of rubber.

**Patentansprüche**

1. Stützradeinheit (10) für Haushaltsmaschinen, insbesondere für eine Waschmaschine, welche ein an einer zwischen zwei Armen (12, 13) einer mit dem Boden der Maschine (32) verbundenen Stützeinrichtung (11) festgehaltenen Welle (17) drehbar angeordnetes Rad (16) umfaßt, wobei das Rad (16) zwei Laufrollen (20, 21) aufweist, welche an den Seiten eines zwischen den Laufrollen (20, 21) angeordneten Radmantels (23) eingreifen, der die Stützfläche des Rades bildet, dadurch gekennzeichnet, daß die Laufrollen (20, 21) drehbar um die Welle (17) angeordnet sind und in teilweisen Eingriff mit den Innenfläche (30, 31) der Arme (12, 13) stehen, und daß der Radmantel (23) zwischen den Laufrollen (20, 21) eingepreßt ist, wobei die entstehende Schrägkraft die Laufrollen gegen die Innenflächen der Arme drückt.

2. Stützradeinheit nach Anspruch 1, dadurch gekennzeichnet, daß die Laufrollen (20, 21) ein Umfangsstützfläche (22) für den Radmantel (23) bilden, wobei jede Laufrolle mit einem sich in radialer Richtung erstreckenden ringförmigen Flansch (24, 25) versehen ist, welcher mit der ihm zugeordneten Seite des Radmantels (23) in Eingriff steht, und daß die Laufrollen einen zusätzlichen ringförmigen Flansch (28, 29) aufweisen, welcher sich in Axialrichtung erstreckt, und entlang wenigstens eines Teiles seiner Umfangsfläche an dem benachbarten Arm (12, 13) des Stützelementes (11) angreift.

3. Stützradeinheit nach Anspruch 2, dadurch gekennzeichnet, daß die Stützfläche des Radmantels (23) polygonförmig ausgebildet ist, wobei die Stützfläche (22) der Laufrollen (20, 21) entsprechend ausgebildet ist.

4. Stützradeinheit nach Anspruch 3, dadurch gekennzeichnet, daß die Stützfläche des Radmantels (23) die Form eines Oktagons hat.

5. Stützradeinheit nach einem der vorhergehenden Ansprüche, dadurch gekennzeichnet, daß der Radmantel (23) aus Gummi besteht.

**Revendications**

1. Dispositif de roue porteuse (10) pour appareils ménagers, notamment pour machine à laver, comprenant une roue (16) supportée par un arbre (17) de manière à pouvoir tourner l'arbre (17) étant fixé entre deux bras (12, 13) d'un support (11) relié à la base (32) de l'appareil, la dite roue (16) comprenant deux roulettes (20, 21) engrenant les côtés d'un pneu (23) disposé entre les roulettes (20, 21) et forment la surface de support de la roue (16) caractérisé en ce que les roulettes (20, 21) sont disposées sur l'arbre (17) de manière à pouvoir tourner et forment un engagement à friction avec les surfaces intérieures (30, 31) des bras (12, 13), et en ce que le pneu (23) est comprimé entre les roulettes (20, 21) qui exercent une force pressant les roulettes contre les surfaces intérieures des bras.

2. Dispositif selon la revendication 1, caractérisé en ce que les roulettes (20, 21) forment une surface de support périphérique pour le pneu (23) chaque roulette étant munie d'une bride (24, 25) annulaire se prolongeant en direction radiale et engagent le côté correspondant du pneu (23), la roulette étant munie d'une autre bride annulaire (28 29) se prolongeant en direction axiale et qui engage le long d'au moins une partie de sa surface axiale le bras (12, 13) voisin du support (11).

3. Dispositif selon la revendication 2, caractérisé en ce que la surface de support du pneu (23) a la forme d'un polygone, la surface de support (22) des roulettes (21, 22) étant formée en correspondance.

4. Dispositif selon la revendication 3, caractérisé en ce que la surface de support du pneu (23) a la forme d'un octagone.

5. Dispositif selon une des revendications précédentes, caractérisé en ce que le pneu (23) est fabriqué en caoutchouc.

Fig. 2

Fig.1

Fig. 3

Fig. 4

1